(19) Europäisches Patentamt
European Patent Office
Office européen des brevets

(11) Veröffentlichungsnummer : **0 068 153**
**B1**

(12) # EUROPÄISCHE PATENTSCHRIFT

(45) Veröffentlichungstag der Patentschrift : **11.12.85**

(51) Int. Cl.[4] : **C 09 B 62/25**, D 06 P 3/66, D 06 P 3/10

(21) Anmeldenummer : **82104635.6**

(22) Anmeldetag : **27.05.82**

(54) **Faserreaktive Disazofarbstoffe, ihre Herstellung und Verwendung.**

(30) Priorität : **05.06.81 DE 3122425**

(43) Veröffentlichungstag der Anmeldung : **05.01.83 Patentblatt 83/01**

(45) Bekanntmachung des Hinweises auf die Patenterteilung : **11.12.85 Patentblatt 85/50**

(84) Benannte Vertragsstaaten : **CH DE FR GB IT LI**

(56) Entgegenhaltungen :
**FR-A- 1 225 281**
**FR-A- 2 468 632**
**GB-A- 952 062**
**GB-A- 2 057 480**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Henk, Hermann, Dr.**
**Roggendorfstrasse 55**
**D-5000 Köln 80 (DE)**
Erfinder : **Schündehütte, Karl Heinz, Dr.**
**Klief 75**
**D-5090 Leverkusen 3 (DE)**

**EP 0 068 153 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Anmeldung betrifft faserreaktive Disazofarbstoffe der allgemeinen Formel (1):

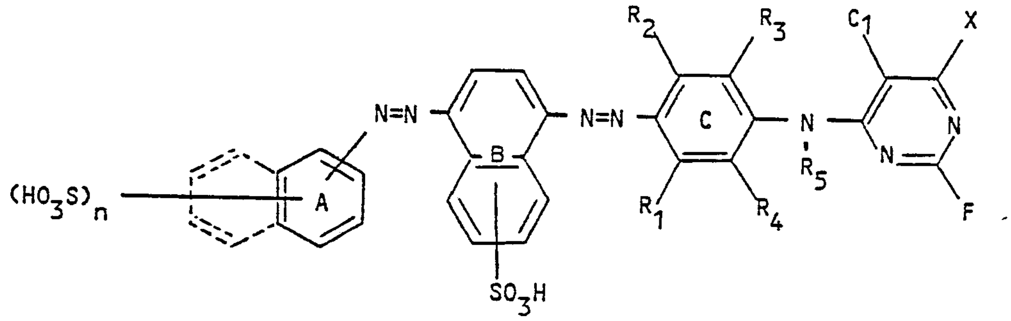

(1)

worin

X = Wasserstoff, Fluor oder Methyl,

$R_1$ bis $R_4$ unabhängig voneinander Wasserstoff, eine $C_1$-$C_4$-Alkylgruppe oder eine $C_1$-$C_4$-Alkoxygruppe bedeuten,

$R_5$ = Wasserstoff oder eine $C_1$-$C_4$-Alkylgruppe,

n = 1, 2 oder 3 ist,

und der Benzolring A gegebenenfalls durch $C_1$-$C_4$-Alkyl-, $C_1$-$C_4$-Alkoxy-, Carboxy-, $C_1$-$C_4$-Alkylcarbonylamino-, Benzoylaminogruppen oder Halogen und der Naphthalinring B gegebenenfalls durch $C_1$-$C_4$-Alkoxy substituiert sein können.

Ist A ein Naphthalinrest, so kann er die Azobrücke in 1- oder 2-Stellung tragen und durch eine bis drei Sulfonsäuregruppen substituiert sein.

Die Herstellung der erfindungsgemäßen faserreaktiven Farbstoffe erfolgt durch Umsetzung eines aminogruppenhaltigen Disazofarbstoffs mit 2,4-Difluor-5-chlorpyrimidin, 2,4,6-Trifluor-5-chlor-pyrimidin oder mit 2,4-Difluor-5-chlor-6-methyl-pyrimidin.

Besonders bevorzugt sind folgende unter Formel (1) fallende Farbstoffe A) bis G):

A) Farbstoffe gemäß Formel (1), dadurch gekennzeichnet, daß die Gruppierung

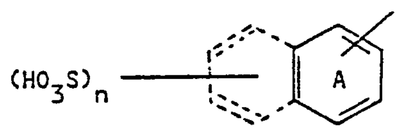

für einen durch eine oder zwei $SO_3H$-Gruppen und gegebenenfalls weiter durch $C_1$-$C_4$-Alkyl-, $C_1$-$C_4$-Alkoxy-, Carboxy-, Halogen-, $C_1$-$C_4$-Alkylcarbonylamino- oder Benzoylaminogruppen substituierten Phenylrest steht.

B) Farbstoffe gemäß Formel (1), dadurch gekennzeichnet, daß die Gruppierung

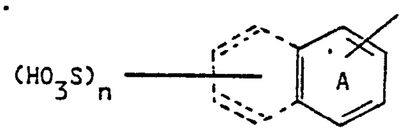

eine der folgenden Bedeutungen besitzt:

durch 1 bis 3 $SO_3H$-Gruppen substituiertes 1-Naphthyl,

durch 1 bis 3 $SO_3H$-Gruppen substituiertes 2-Naphthyl.

C) Farbstoffe gemäß Formel (1), dadurch gekennzeichnet, daß die Gruppierung

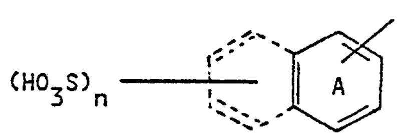

eine der folgenden Bedeutungen besitzt:

2,4-Disulfophenyl; 2,5-Disulfophenyl, 3,6,8-Trisulfonaphthyl-(2); 4,6,8-Trisulfonaphthyl-(2).

D) Farbstoffe gemäß Formel (1), dadurch gekennzeichnet, daß die Gruppierung

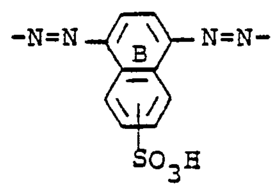

in ihrem nicht-azobrückentragenden Ring eine $SO_3H$-Gruppe enthält, und im azobrückentragenden Ring gegebenenfalls durch $C_1$-$C_4$-Alkoxy substituiert ist.

E) Farbstoffe gemäß Formel (1), dadurch gekennzeichnet, daß in der Gruppierung

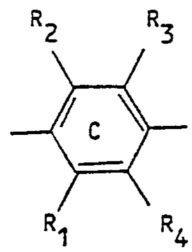

1 oder 2 der Reste $R_1$ bis $R_4$ für $C_1$-$C_4$-Alkyl und/oder $C_1$-$C_4$-Alkoxy stehen.

F) Farbstoffe gemäß Formel (1), dadurch gekennzeichnet, daß die Gruppierung

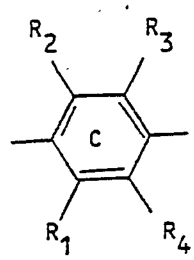

eine der folgenden Bedeutungen hat :

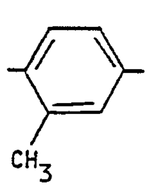 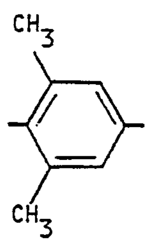 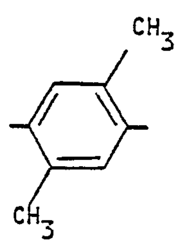 und 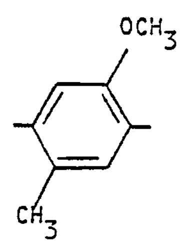

G) Farbstoffe gemäß Formel (1), dadurch gekennzeichnet, daß $R_5$ für Wasserstoff steht.

Die Herstellung des aminogruppenhaltigen Disazofarbstoffs erfolgt im allgemeinen durch Diazotierung eines Phenyl- bzw. Naphthylamins der Formel (2) :

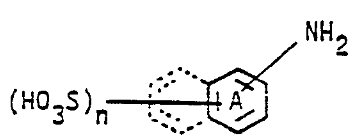

(2)

und Kupplung auf ein Naphthylamin der Formel (3) :

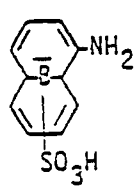

(3)

Weiterdiazotierung und Kupplung auf ein Anilinderivat der Formel (4) :

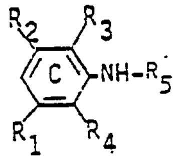

(4)

zu einem Disazofarbstoff der Formel (5) :

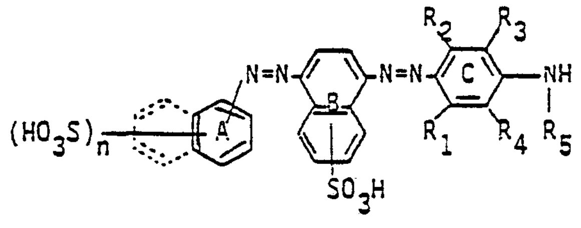

(5)

wobei n und $R_1$ bis $R_5$ die obengenannte Bedeutung haben.

Beispiele für geeignete aromatische Amine der Formel (2) sind :

Anilin-2-, -3- oder -4-sulfonsäure, Anilin-2,4-, -2,5- oder -3,5-disulfonsäure, 4- oder 5-Chloranilin-2-sulfonsäure, 4,6-Dichloranilin-2-sulfonsäure, 4- oder 6-Chloranilin-3-sulfonsäure, 2-Chloranilin- oder 2,5-Dichloranilin-4-sulfonsäure, 4- oder 5-Sulfo-2-aminobenzoesäure, 4-(Acetylamino- oder Methyl- oder Methoxy)-anilin-2-sulfonsäure, 3-Acetyl-amino-anilin-2-sulfonsäure, 2- oder 3-Methylanilin-4-sulfonsäure, 2-(Methyl- oder Methoxy)-anilin-3-sulfonsäure, 1-Naphthylamin-2-, -3-, -4-, -5-, -6-, -7- oder -8-sulfonsäure, 2-Naphthylamin-1-, -5-, -6-, -7- oder -8-sulfonsäure, 1-Naphthylamin-2,4-, -3,6-, -3,7-, -3,8-, -4,6-, -4,7-, -4,8-, -5,7- oder -6,8-disulfonsäure, 2-Naphthylamin-1,5-, -3,6-, -3,7-, -4,8-, -5,7- oder -6,8-disulfonsäure, 1-Naphthylamin-2,4,6-, -2,4,7-, -3,6,8- oder -4,6,8-trisulfonsäure, 2-Naphthylamin-1,5,7-, -3,6,8- oder -4,6,8-trisulfonsäure.

Beispiele für geeignete Naphthylamine der Formel (3) sind :

1-Naphythylamin-6-, -7- oder -8-sulfonsäure, 1-Amino-2-ethoxynaphthalin-6-sulfonsäure, 1-Amino-2-naphthoxyessigsäure-6-sulfonsäure, 1-Amino-2-naphthoxyessigsäure-7-sulfonsäure, 1-Amino-2-ethoxynaphthalin-7-sulfonsäure.

Geeignete Verbindungen der Formel (4) sind :

Anilin, N-Methylanilin, N-Ethylanilin, N-Butylanilin, 2- oder 3-Methylanilin, N,2-Dimethylanilin, N-Ethyl-2- oder -3-methylanilin, N-Butyl-3-methylanilin, 2-Ethylanilin, 2,3-, 2,5-, 2,6- oder 3,5-Dimethylanilin, 2,3,5-Trimethylanilin, 2- oder 3-Methoxy- oder Ethoxyanilin, 2-Methyl-5-methoxyanilin, 2-Methoxy-5-methylanilin, 2-Ethoxy-5-methylanilin, 2,5-Dimethoxyanilin, 2,5-Diethoxyanilin.

Die Herstellung der erfindungsgemäßen Farbstoffe und Farbstoffzwischenprodukte erfolgt vorzugsweise in wäßriger Lösung. Die Umsetzungen mit einem 2,4-Difluor-5-chlor-pyrimidin-derivat erfolgen bei schwachsaurem bis schwachalkalischem pH-Wert. Die bei der Kondensation freiwerdende Fluorwasserstoffsäure wird durch Zugabe von verdünnter Alkalihydroxid- bzw. -carbonat- oder -bicarbonat-Lösung neutralisiert.

Die Diazotierung des aromatischen Amins der Formel (2) erfolgt durch Einwirkung von salpetriger Säure in wäßrig-mineralsaurer Lösung bei tiefer Temperatur. Die Kupplung auf ein Naphthylamin der Formel (3) erfolgt im sauren pH-Bereich. Der so erhaltene aminogruppenhaltige Monoazofarbstoff kann nach beendeter Kupplung auf ein Anilinderivat der Formel (4) aufgebracht werden und verläuft ebenfalls im sauren pH-Bereich. Die anschließende Umsetzung mit einem 2,4-Difluor-5-chlorpyrimidin-derivat kann nach beendeter zweiter Kupplung ohne Zwischenisolierung des Disazofarbstoffs vorgenommen werden. Die erfindungsgemäßen Farbstoffe eignen sich zum Färben, insbesondere zum Bedrucken verschiedener Materialien wie z. B. Wolle, Polyamid und Leder, insbesondere aber cellulosehaltiger Materialien wie Leinen, Zellwolle, regenerierter Cellulose, vor allem aber Baumwolle.

Aus der FR-PS-1 225 281 ist ein ähnlich aufgebauter Reaktivfarbstoff bekannt. Gegenüber diesem Farbstoff zeigt der konstitutionell nächstvergleichbare beanspruchte Farbstoff überraschende Vorteile beim Färben von Baumwolle aus langer Flotte.

Beispiel 1

86 Teile Anilin-2,5-disulfonsäure werden in 400 Teilen Wasser unter Zusatz von Natronlauge neutral gelöst. Bei ca. 0 °C werden unter kräftigem Rühren 100 Teile 30 %ige Salzsäure und 70 Teile 30 %ige Nitritlösung rasch zugegeben. In die so erhaltene Diazolösung werden 65 Teile 1-Naphthylamin-6-sulfonsäure eingetragen. Mit verdünnter Natronlauge wird langsam auf pH 4 gestellt. Die Kupplung ist rasch beendet. Die Temperatur beträgt 10 bis 15 °C.

Der teils ausgefallene Monoazofarbstoff wird mit Natronlauge neutral gelöst. Man fügt 70 Teile

30 %ige Natriumnitritlösung zu und gießt in eine Mischung aus 100 Teilen 30 %iger Salzsäure und 100 Teilen gestoßenem Eis. In die so erhaltene Diazolösung werden 31 Teile m-Toluidin langsam eingetropft. Mit verdünnter Natronlauge wird ein pH-Wert von 2 bis 3 gehalten bis die Kupplung beendet ist. Das Endvolumen beträgt ca. 1,4 l.

Der teils ausgefallene Disazofarbstoff wird mit Natronlauge neutral gelöst. Anschließend werden 58 Teile 2,4-Difluor-5-chlor-5-methylpyrimidin zugesetzt. Man erwärmt in ca. 30 Minuten auf 40 bis 50 °C und hält gleichzeitig mit 80 Teilen 20 %iger Sodalösung einen pH-Wert von 6 bis die Kondensation — die sich gut chromatographisch verfolgen läßt — beendet ist. Der Farbstoff wird durch Zugabe von Salz isoliert. Nach dem Trocknen im Vakuum und Mahlen erhält man ein dunkelbraunes Farbstoffpulver. Der Farbstoff liefert auf Baumwolle und Zellwolle aus langer Flotte sowie im Druck orangebraune Färbungen bzw. Drucke von hoher Licht- und Naßechtheit. Er entspricht in Form der freien Säure folgender Formel :

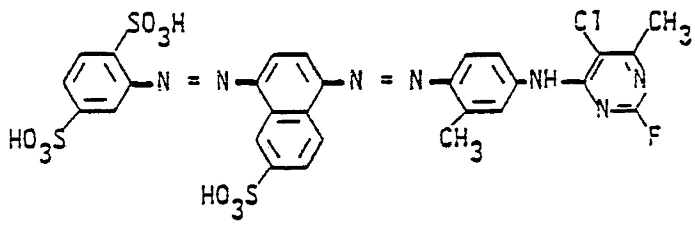

In der nachfolgenden Tabelle sind weitere Beispiele aufgeführt. Die Herstellung erfolgt analog Beispiel 1. Man erhält wertvolle Farbstoffe, die auf Cellulosefasern die angegebene Nuance besitzen.

(Siehe Tabelle Seite 6 ff.)

| Beispiel | Diazokomponente Formel (2) | Mittelkomponente Formel (3) | Endkomponente Formel (4) | Pyridin-derivat | Farbton auf Cellulsoe | Indicator Number*) |
|---|---|---|---|---|---|---|
| 1 | Anilin-2,5-disulfonsäure | 1-Naphthylamin-6-sulfonsäure | 3-Methylanilin | 2,4-Difluor-5-chlor-6-methylpyrimidin | orangebraun | 24 |
| 2 | 2-Naphthylamin-4,6,8-trisulfonsäure | " | " | " | rotbraun | 25 |
| 3 | Anilin-2,4-disulfonsäure | " | " | " | orangebraun | 24 |
| 4 | 2-Naphthylamin-3,6,8-trisulfonsäure | " | " | " | rotbraun | 25 |
| 5 | Anilin-2,4-disulfonsäure | " | 3,5-Dimethylanilin | " | gelbbraun | 24 |
| 6 | Anilin-2,5-disulfonsäure | " | " | " | gelbbraun | 24 |
| 7 | 2-Naphthylamin-3,6,8-trisulfonsäure | " | " | " | rotbraun | 25 |
| 8 | 2-Naphthylamin-4,6,8-trisulfonsäure | " | " | " | rotbraun | 25 |
| 9 | Anilin-2,4-disulfonsäure | " | 2,5-Dimethylanilin | " | gelbbraun | 24 |

*) Nach Color Index Hue Indication Chart

(Fortsetzung)

| Beispiel | Diazokomponente Formel (2) | Mittelkomponente Formel (3) | Endkomponente Formel (4) | Pyridin-derivat | Farbton auf Cellulsoe | Indicator Number*) |
|---|---|---|---|---|---|---|
| 10 | Anilin-2,5-disulfonsäure | 1-Naphthylamin-6-sulfonsäure | 2,5-Dimethylanilin | 2,4-Difluor-5-chlor-6-methylpyrimidin | gelbbraun | 24 |
| 11 | 2-Naphthylamin-3,6,8-trisulfonsäure | " | " | " | rotbraun | 25 |
| 12 | 2-Naphthylamin-4,6,8-trisulfonsäure | " | " | " | rotbraun | 25 |
| 13 | Anilin-2,4-disulfonsäure | " | 2-Methoxy-5-methylanilin | " | rotbraun | 26 |
| 14 | Anilin-2,5-disulfonsäure | " | " | " | rotbraun | 26 |
| 15 | 2-Naphthylamin-3,6,8-trisulfonsäure | " | " | " | rotbraun | 26 |
| 16 | 2-Naphthylamin-4,6,8-trisulfonsäure | " | " | " | rotbraun | 26 |
| 17 | Anilin-2,5-disulfonsäure | " | 3-Methyl-anilin | 2,4,6-Trifluor-5-chlor-pyrimidin | orangebraun | 24 |
| 18 | " | " | " | 2,4-Difluor-5-chlor-pyrimidin | orangebraun | 24 |

*) Nach Color Index Hue Indication Chart

**Patentansprüche**

1. Faserreaktive Disazofarbstoffe der Formel (1)

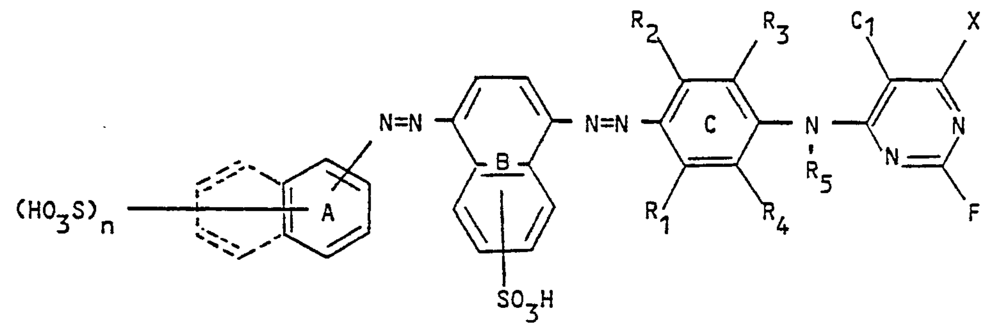

(1)

worin

X = Wasserstoff, Fluor oder Methyl,

$R_1$ bis $R_4$ unabhängig voneinander Wasserstoff, eine $C_1$-$C_4$-Alkylgruppe oder eine $C_1$-$C_4$-Alkoxygruppe bedeuten,

$R_5$ = Wasserstoff oder eine $C_1$-$C_4$-Alkylgruppe,

n = 1, 2 oder 3 ist,

und der Benzolring A gegebenenfalls durch $C_1$-$C_4$-Alkyl-, $C_1$-$C_4$-Alkoxy-, Carboxy-, $C_1$-$C_4$-Alkylcarbonylamino-, Benzoylaminogruppen oder Halogen und der Naphthalinring B gegebenenfalls durch $C_1$-$C_4$-Alkoxy substituiert sein können.

2. Farbstoffe gemäß Anspruch 1, dadurch gekennzeichnet, daß die Gruppierung

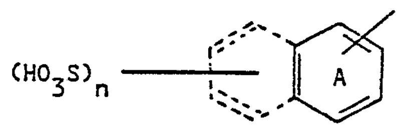

für einen durch eine oder zwei $SO_3H$-Gruppen und gegebenenfalls weiter durch $C_1$-$C_4$-Alkyl-, $C_1$-$C_4$-Alkoxy-, Carboxy-, Halogen-, $C_1$-$C_4$-Alkylcarbonylamino- oder Benzoylaminogruppen substituierten Phenylrest steht.

3. Farbstoffe gemäß Anspruch 1 oder 2, dadurch gekennzeichnet, daß die Gruppierung

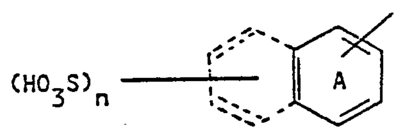

eine der folgenden Bedeutungen besitzt :

durch 1 bis 3 $SO_3H$-Gruppen substituiertes 1-Naphthyl,

durch 2 bis 3 $SO_3H$-Gruppen substituiertes 2-Naphthyl.

4. Farbstoffe gemäß Ansprüchen 1 bis 3, dadurch gekennzeichnet, daß die Gruppierung

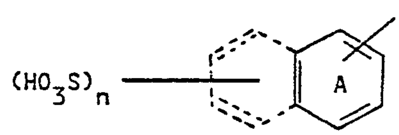

eine der folgenden Bedeutungen besitzt :

2,4-Disulfophenyl ; 2,5-Disulfophenyl ; 3,6,8-Trisulfonaphthyl-(2) ; 4,6,8-Trisulfonaphthyl-(2).

5. Farbstoffe gemäß Ansprüchen 1 bis 4, dadurch gekennzeichnet, daß in der Gruppierung

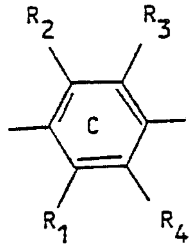

1 oder 2 der Reste $R_1$ bis $R_4$ für $C_1$-$C_4$-Alkyl und/oder $C_1$-$C_4$-Alkoxy stehen.

6. Farbstoffe gemäß Ansprüchen 1 bis 5, dadurch gekennzeichnet, daß die Gruppierung

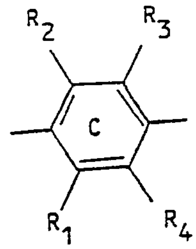

eine der folgenden Bedeutungen hat :

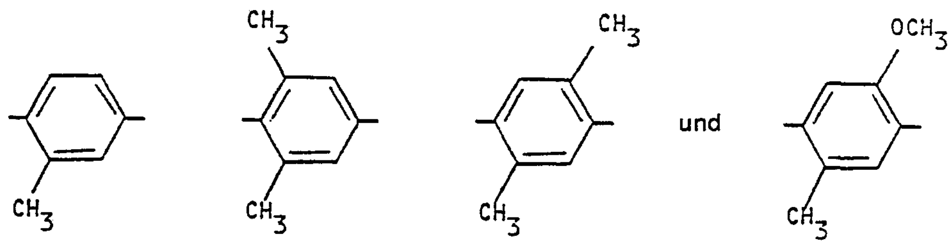

7. Verfahren zum Färben oder Bedrucken von hydroxylgruppenhaltigen oder amidgruppenhaltigen Materialien, dadurch gekennzeichnet, daß man Farbstoffe gemäß den Ansprüchen 1 bis 6 verwendet.

**Claims**

1. Fibre-reactive disazo dyestuffs of the formula (1)

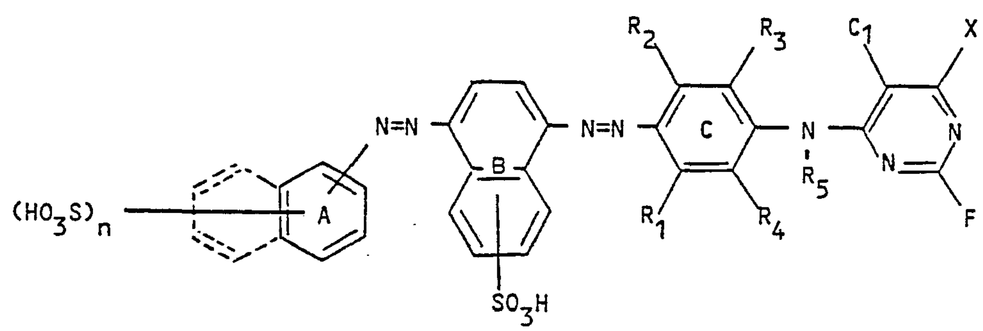

(1)

wherein

X denotes hydrogen, fluorine or methyl,

$R_1$ to $R_4$ independently of one another denote hydrogen, a $C_1$-$C_4$-alkyl group or a $C_1$-$C_4$-alkoxy group,

$R_5$ is hydrogen or a $C_1$-$C_4$-alkyl group and

n is 1, 2 or 3,

and the benzene ring A can optionally be substituted by $C_1$-$C_4$-alkyl, $C_1$-$C_4$-alkoxy, carboxyl, $C_1$-$C_4$-alkylcarbonylamino or benzoylamino groups or halogen and the naphthalene ring B can optionally be substituted by $C_1$-$C_4$-alkoxy.

2. Dyestuffs according to Claim 1, characterised in that the grouping

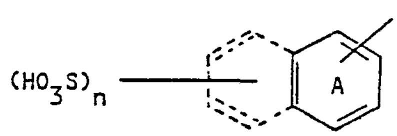

represents a phenyl radical which is substituted by one or two $SO_3H$ groups and which may be further substituted by $C_1$-$C_4$-alkyl, $C_1$-$C_4$-alkoxy, carboxyl, halogen, $C_1$-$C_4$-alkylcarbonylamino or benzoylamino groups.

3. Dyestuffs according to Claim 1 or 2, characterised in that the grouping

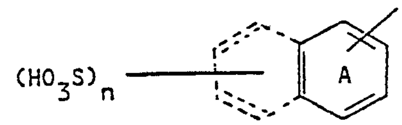

has one of the following meanings:

1-naphthyl which is substituted by 1 to 3 $SO_3H$ groups, or a 2-naphthyl which is substituted by 1 to 3 $SO_3H$ groups.

4. Dyestuffs according to Claims 1 to 3, characterised in that the grouping

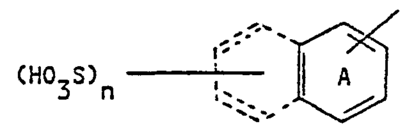

has one of the following meanings:

2,4-disulphophenyl ; 2,5-disulphophenyl ; 3,6,8-trisulpho-2-naphthyl ; or 4,6,8-trisulpho-2-naphthyl.

5. Dyestuffs according to Claims 1 to 4, characterised in that in the grouping

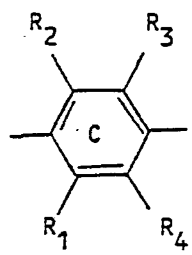

1 or 2 of the radicals $R_1$ to $R_4$ represent $C_1$-$C_4$-alkyl and/or $C_1$-$C_4$-alkoxy.

6. Dyestuffs according to Claims 1 to 5, characterised in that the grouping

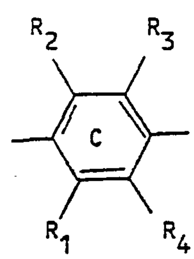

has one of the following meanings:

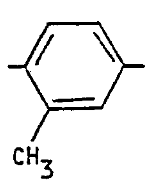

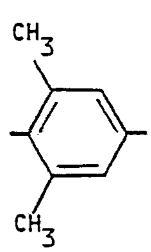

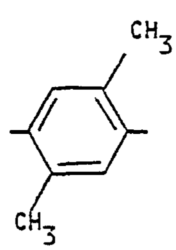

or

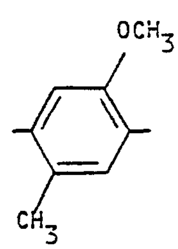

7. Process for dyeing or printing materials containing hydroxyl groups or amide groups, characterised in that dyestuffs according to Claims 1 to 6 are used.

**Revendications**

1. Colorants dis-azoïques réactifs avec les fibres, répondant à la formule 1

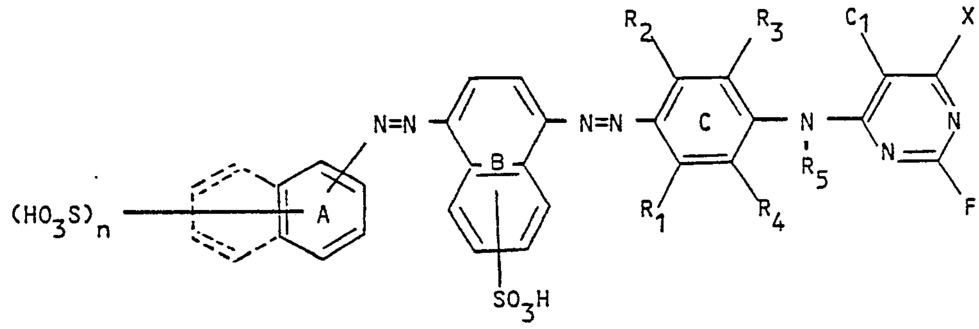 (1)

dans laquelle

X = hydrogène, fluor ou méthyle,

$R_1$ à $R_4$ représentent, indépendamment les uns des autres, l'hydrogène, un groupe alkyle en $C_1$-$C_4$ ou un groupe alcoxy en $C_1$-$C_4$,

$R_5$ = hydrogène ou un groupe alkyle en $C_1$-$C_4$,

n = 1, 2 ou 3,

et le noyau benzénique A peut être éventuellement substitué par des groupes alkyle en $C_1$-$C_4$, alcoxy en $C_1$-$C_4$, carboxy, (alkyle en $C_1$-$C_4$)-carbonylamino, benzoylamino ou des halogènes, et le noyau naphtalénique B peut être éventuellement substitué par des groupes alcoxy en $C_1$-$C_4$.

2. Colorants selon la revendicaiton 1, caractérisés en ce que le groupement

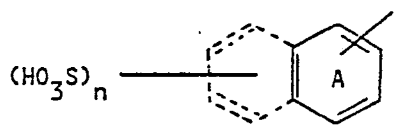

est un reste phényle substitué par un ou deux groupes $SO_3H$ et encore éventuellement substitué par des groupes alkyle en $C_1$-$C_4$, alcoxy en $C_1$-$C_4$, carboxy, des halogènes, des groupes (alkyle en $C_1$-$C_4$)-carbonylamino ou benzylamino.

3. Colorants selon la revendications 1 ou 2, caractérisés en ce que le groupement

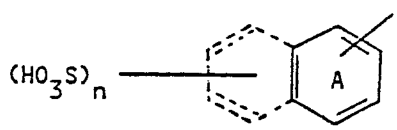

est l'un des groupements suivants

un reste 1-naphtyle substitué par un à trois groupes $SO_3H$,

un reste 2-naphtyle substitué par un à trois groupes $SO_3H$.

4. Colorants selon les revendications 1 à 3, caractérisés en ce que le groupement

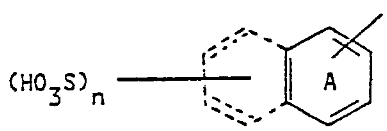

est l'un des groupements suivants :

2,4-disulfophényle ; 2,5-disulfophényle ; 3,6,8-trisulfonaphtyle-(2) ; 4,6,8-trisulfonaphtyle-(2).

5. Colorants selon les revendications 1 à 4, caractérisés en ce que, dans le groupement

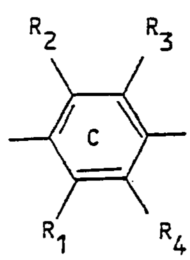

un ou deux des symboles $R_1$ à $R_4$ représentent des groupes alkyle en $C_1$-$C_4$ et/ou alcoxy en $C_1$-$C_4$.

6. Colorants selon les revendications 1 à 5, caractérisés en ce que le groupement

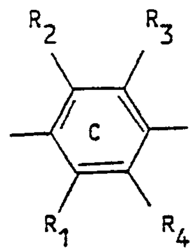

est l'un des groupements suivants :

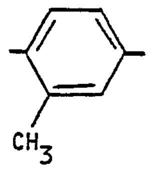 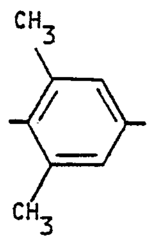 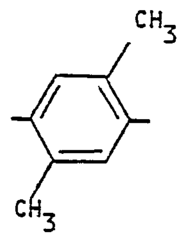 et 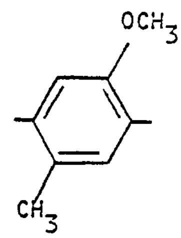

7. Procédé pour la teinture ou l'impression de matières contenant des groupes hydroxy ou des groupes amide, caractérisé en ce que l'on utilise des colorants selon les revendications 1 à 6.